# EUROPEAN PATENT SPECIFICATION

(11) **EP 1 800 990 B1**
(45) Date of publication and mention of the grant of the patent: **29.09.2010**
(21) Application number: 06126419.8
(22) Date of filing: 18.12.2006
(51) Int. Cl.: B62D 1/16

(54) **Vehicle steering column shroud assembly**
Anordnung einer Lenksäulenverkleidung eines Fahrzeuges
Agencement de couvercle de colonne de direction d'un véhicule

(30) Priority: 23.12.2005 GB 0526288
(43) Date of publication of application: 27.06.2007
(73) Proprietor: Nissan Motor Manufacturing (UK) Ltd., Cranfield Bedfordshire MK43 0DB (GB)
(72) Inventor: Tanner, Kevin, Cranfield, Bedfordshire MK43 0DB (GB)
(74) Representative: Hufton, Victoria Alice

(56) References cited:
- EP-A1- 1 340 654
- GB-A- 2 161 761
- JP-A- 63 149 259
- JP-A- 2000 135 952
- JP-A- 2002 067 974
- US-A- 4 411 331

## Description

The invention is in the field of trim components for use in a vehicle interior. In particular, the invention relates to a shroud assembly for use in encasing the steering column in a motor vehicle.

A steering column shroud assembly is a component of the interior trim of a motor vehicle that serves to encase the upper or rearward part of the steering column within a shell immediately ahead of the steering wheel. The steering column is associated with several driver controlled electrical and mechanical systems. In addition to the obvious steering controls, other ancillary electrical systems such as the headlamps, indicator lights and windscreen wiper are all commonly controlled via controls mounted on 'stalks' that project outwardly from the steering column. It is also common for the vehicle ignition lock to be mounted to one side of the steering column.

Known steering column shroud assemblies are typically in the form of a shell-like structure that is comprised of two portions. These two portions are brought together to encase the steering column and thereby, to support or encase the stalks and ignition lock. The shroud also defines a conduit around the steering column through which ancillary electrical connections, wires and the like can be routed.

Known steering column shroud assemblies typically attach directly to points on the steering column via screw fixings. One drawback with such an arrangement is that manufacture of the steering column is made more complex with the need for additional fixing points to be provided. To overcome such issues US-A-4411331 provides a two-piece shroud assembly that comprises integrally moulded C-shaped clips made from a resilient material that embrace and grip the steering column. However, manufacture of the assembly described in US-A-4411331 is dependent upon specialist moulding technology because of the need for the integrally moulded C-shaped clips, thereby adding additional expense and tooling requirements.

An alternative shroud assembly is described in EP-A-1340654, in which upper and lower shroud parts attach to each other via a plurality of snap fasteners. Specifically, the upper shroud part attaches to the steering column and the lower shroud part snap-fits to the upper shroud part. The lower shroud part plays little role in locating the shroud assembly as a whole with respect to the steering column.

JP 2000 135 952, which describes the preamble of claim 1, discloses a steering column shroud assembly for use in a vehicle comprising: an upper shroud member and a lower shroud member that cooperate to encase a steering column, the upper and lower shroud members being mouldings; the upper shroud member having an integrally moulded edge that extends around the periphery of the upper shroud member; the lower shroud member defining an interior surface, and having an integrally moulded projection which extends upwardly from the interior surface and which defines a second jaw adapted to grip the steering column.

It is desirable to provide a steering column shroud assembly that overcomes the problems in the art described above, and is easy to manufacture and install.

According to the present invention there is provided a steering column shroud assembly characterised by the features of claim 1.

Unless otherwise defined, all technical terms used herein have the same meaning as commonly understood by one of ordinary skill in the art to which this invention belongs.

It will be appreciated that the terms 'upper' and 'lower' as used herein, refer to orientation relative to the vehicle in which the steering shroud assembly is to be installed.

Typically, the first and second jaws engage the steering column at positions diametrically opposed to each other, so as to maximise the gripping force on the steering column. It is also preferred that the first and second jaws are contoured so as to provide an increased area of surface contact with the steering column. The contouring can be such that the first and/or second jaws define a concave curved or semi-circular surface that is of a similar radius to that of the steering column at that location and so allows the first and second jaws to contact the steering column surface along substantially all of their respective lengths. Alternatively, the first and/or second jaws can have a concave curved or semi-circular surface with a greater radius of curvature than that of the steering column such that the first and second jaws to contact the steering column surface along less than their respective lengths.

In a specific embodiment of the invention, the upper shroud member comprises an edge that extends around the periphery of the upper shroud member, a section of which edge extends downwardly and thereby forms the first jaw. Typically, the downwardly extending section is in the form of a flange.

The attachment means may comprise at least one first attachment projection that extends downwardly from the interior surface of the upper shroud member, and at least one second attachment projection that extends upwardly from the interior surface of the lower shroud member, such that the tips of the respective attachment projections contact each other. Suitably the attachment projections each define a channel suitable for accommodating a fixing means. The fixing means can be in the form of a pin, a screw or a bolt. Alternatively, the associated attachment projections engage each other via a male-female snap fixing mechanism.

The steering column shroud assembly of the invention is suitably constructed from a mouldable material that is selected from a plastics material; a resin; and a polymer, any of which may be fibre-reinforced. An advantage of the present invention is that the jaws for gripping the steering column are moulded features integral with the shroud members.

Typically, the shroud assembly of the invention comprises one or more openings located in the upper and lower shroud members that accommodate the aforementioned control stalks, for example. Such openings are conveniently defined by the peripheral edges of the upper and lower shroud members cooperating together.

A second aspect of the invention provides for vehicle comprising a steering column shroud assembly of the type as described herein. Typically such vehicles are cars, multi-passenger vehicles (MPVs), sports utility vehicles (SUVs), vans, buses, lorrys (trucks) or any other form of passenger carrying motor vehicle.

An example of the present invention will now be described with reference to the following drawings, in which:

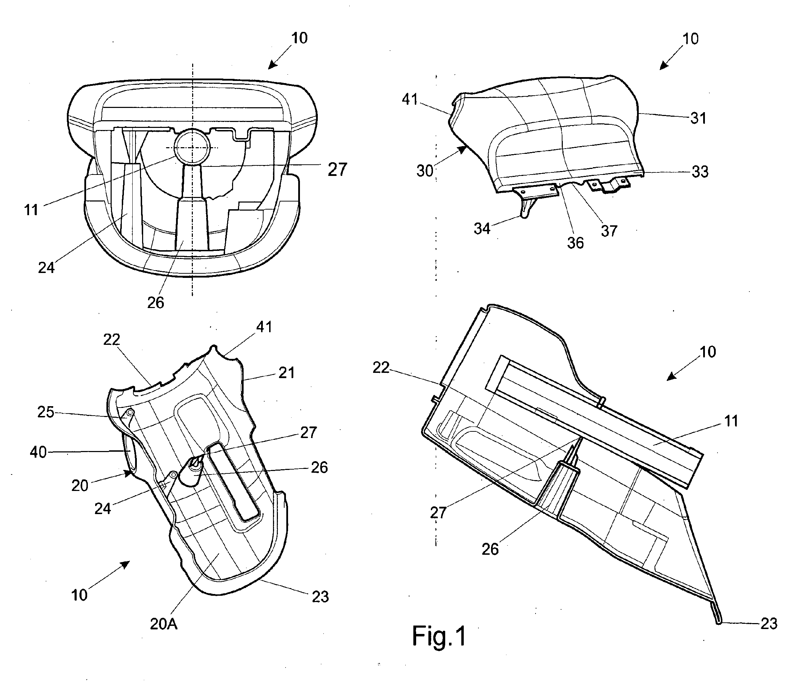

Figure 1 is a schematic diagram showing a steering column shroud assembly of the invention in various orientations, with the means for gripping the steering column particularly highlighted;
Figure 2 is a rearward perspective view of a steering column shroud assembly of the invention - the interior features of the lower shroud member are particularly visible;
Figure 3 is a cross section view of the steering column shroud assembly of Fig. 2 along line B-B' and provides detail regarding the means for gripping the steering column as well as the attachment arrangement.

A shroud assembly 10 encases the upper rearward portion of a steering column 11. The shroud assembly 10 comprises a lower shroud member 20 and an upper shroud member 30 that together encase the steering column assembly in a shell-like manner and further define a conduit through which wire connections for instrumentation and driver controlled systems associated with the steering column may pass - e.g. indicators, head lamp controls, hi-fi controls. The lower shroud member and upper shroud member 30 are made from a moulded plastics material.

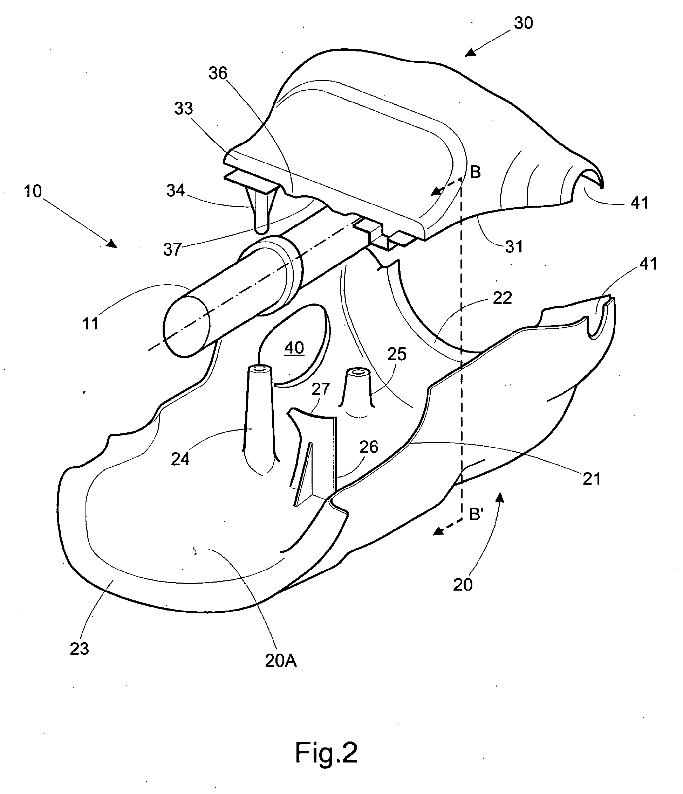

As shown in Fig. 2, the lower shroud member 20 is in the form of a single piece moulding. The periphery of the lower shroud member 20 defines an edge 21 as well as collar portion 22 that abuts the central boss of the steering wheel (not shown), and a lower rim 23 that abuts adjacent trim panels of the vehicle interior. Lower shroud member 20 defines an interior surface 20A. Extending upwardly from the interior surface 20A are hollow attachment posts 24, 25 and also post 26. Post 26 includes a jaw 27 at the free end opposite to interior surface 20A. Jaw 27 is contoured so as to ensure good contact with the curved surface of the steering column 11.

The upper shroud member 30 is also in the form of a single-piece moulding. The periphery of the upper shroud member 30 defines an edge 31 as well as a collar portion that abuts the central boss of the steering wheel (not shown) and that cooperates with collar portion 22 of the lower shroud member 20 to form a substantially continuous collar that defines a central opening. The lower edge 33 of upper shroud member 20 includes a flange 36 that extends downwardly and which defines a jaw 37. The jaw 37 is contoured to ensure good contact with the curved surface of the steering column 11. The upper shroud member 30 also includes attachment post 34 and a further attachment post that is not visible in Fig. 2, both located on the interior surface. The attachment post 34 extends downwardly and contacts the upwardly projecting attachment post 24. The attachment posts 24 and 34 can attach directly to each other via a snap fixing arrangement in which one of the attachment posts provides a male fixing member suitable for engagement with a female locking member on the other corresponding attachment post. Alternatively, the attachment posts can cooperate to define a channel through which a pin or screw fixing can extend. The attachment point, as defined by attachment posts 24 and 34, is located adjacent to and in the vicinity of the post 26 and flange 36.

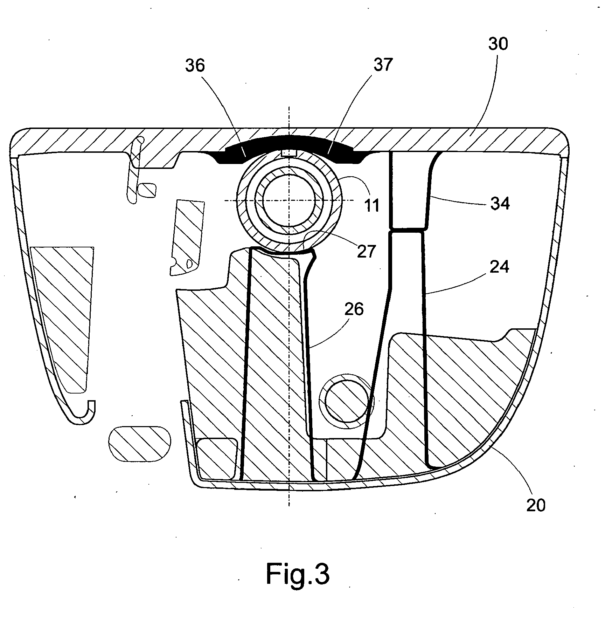

Upon attachment of the upper shroud member 30 to the lower shroud member 20, the upper jaw 37 and the lower jaw 27 are brought to bear upon the surface of the steering column 11 while diametrically opposed to one another (see Fig. 3). Hence, the upper jaw 27 and lower jaw 37 secure the shroud assembly 10 to the steering column 11. Where the fixings used in the attachment posts 34, 24 are screw fixings, the compression force exerted by jaws 27, 37 on the steering column 11 can be adjusted according to the torque applied to the screw fixing.

The shroud assembly 10 includes openings 40 and 41, which provide access for installation of instrumentation and driver controlled systems such as stalks as described above.

Although particular embodiments of the invention have been disclosed herein in detail, this has been done by way of example and for the purposes of illustration only. The aforementioned embodiments are not intended to be limiting with respect to the scope of the appended claims, which follow. It is contemplated by the inventors that various substitutions, alterations, and modifications may be made to the invention without departing from the scope of the invention as defined by the claims.

## Claims

1. A steering column shroud assembly (10) for use in a vehicle comprising:
an upper shroud member (30) and a lower shroud member (20) that cooperate to encase a steering column (11), the upper and lower shroud members (20, 30) being mouldings;
the upper shroud member (30) having an integrally moulded edge (31) that extends around the periphery of the upper shroud member (30);
the lower shroud member (20) defining an interior surface, and having an integrally moulded projection which extends upwardly from the interior surface and which defines a second jaw (27) adapted to grip the steering column (11); and **characterised in that**
a flange (36) extends downwardly from the edge (31) of the upper shroud member (30) to define a first jaw (37) adapted to grip the steering column (11) in co-operation with the second jaw (27); and
attachment means (24, 34) are provided for attaching the upper shroud member (30) to the lower shroud member (20) such that the jaws (27, 37) are brought together around the steering column (11) to support the shroud assembly (10) upon the steering column (11).

2. A steering column shroud assembly (10) according to claim 1, wherein the first and second jaws (27, 37) are contoured so as to provide an increased area of surface contact with the steering column (11).

3. A steering column shroud assembly (10) according to any previous claim, wherein the attachment means (24, 34) comprise at least one first attachment projection that extends downwardly from a first interior surface of the upper shroud member (30), and at least one second attachment projection that extends upwardly from the interior surface of the lower shroud member (20), such that the tips of the respective attachment projections contact each other.

4. A steering column shroud assembly (10) according to claim 3, wherein the at least one first attachment and the at least one second attachment means each define a channel suitable for accommodating a fixing means.

5. A steering column shroud assembly (10) according to claim 4, wherein the fixing means is selected from a pin; a screw; and a bolt.

6. A steering column shroud assembly (10) according to claim 3, wherein the at least one first attachment means engages the second attachment means via a male-female snap fixing mechanism.

7. A steering column shroud assembly (10) according to any previous claim, wherein the mouldings comprise a material selected from a plastics material; a resin; a polymer.

8. A steering column shroud assembly (10) according to claim 7, wherein the material is further fibre reinforced.

9. A steering column shroud assembly (10) according to any previous claim, comprising one or more openings (40, 41) located in the upper and lower shroud members (20, 30).

10. A steering column shroud assembly (10) according to any previous claim, comprising one or more openings (40, 41) defined by the peripheral edges of the upper and lower shroud members.

11. A vehicle comprising a steering column shroud assembly (10) as described in any of claims 1 to 10.

## Patentansprüche

1. Lenksäulenverkleidungs-Baugruppe (10) zur Verwendung in einem Fahrzeug, die Folgendes umfasst:
ein oberes Verkleidungsglied (30) und ein unteres Verkleidungsglied (20), die zusammenwirken, um eine Lenksäule (11) zu umhüllen, wobei es sich bei dem oberen und dem unteren Verkleidungsglied (20, 30) um Formteile handelt;
wobei das obere Verkleidungsglied (30) einen angeformten Rand (31) hat, der sich um den Umfang des oberen Verkleidungsglieds (30) erstreckt;
wobei das untere Verkleidungsglied (20) eine innere Oberfläche definiert und einen angeformten Vorsprung hat, der sich von der inneren Oberfläche nach oben erstreckt und der eine zweite Backe (27) definiert, die dazu angepasst ist, die Lenksäule (11) zu greifen; und **dadurch gekennzeichnet, dass**
ein Flansch (36) sich vom Rand (31) des oberen Verkleidungsglieds (30) nach unten erstreckt, um eine erste Backe (37) zu definieren, die dazu angepasst ist, die Lenksäule (11) in Zusammenwirkung mit der zweiten Backe (27) zu greifen; und
Befestigungsmittel (24, 34) vorgesehen sind, um das obere Verkleidungsglied (30) am unteren Verkleidungsglied (20) zu befestigen, so dass die Backen (27, 37) um die Lenksäule (11) zusammengeführt werden, um die Verkleidungsbaugruppe (10) auf der Lenksäule (11) zu halten.

2. Lenksäulenverkleidungs-Baugruppe (10) nach Anspruch 1, wobei die erste und die zweite Backe (27, 37) konturiert sind, um einen vergrößerten Bereich des Flächenkontakts mit der Lenksäule (11) vorzusehen.

3. Lenksäulenverkleidungs-Baugruppe (10) nach einem der vorangehenden Ansprüche, wobei die Befestigungsmittel (24, 34) mindestens einen ersten Befestigungsvorsprung, der sich von einer ersten inneren Oberfläche des oberen Verkleidungsglieds (30) nach unten erstreckt und mindestens einen zweiten Befestigungsvorsprung, der sich von der inneren Oberfläche des unteren Verkleidungsglieds (20) nach oben erstreckt, umfassen, so dass die Spitzen der jeweiligen Befestigungsvorsprünge einander berühren.

4. Lenksäulenverkleidungs-Baugruppe (10) nach Anspruch 3, wobei das mindestens eine erste und das mindestens eine zweite Befestigungsmittel jeweils eine zum Aufnehmen eines Fixiermittels geeignete Rinne definieren.

5. Lenksäulenverkleidungs-Baugruppe (10) nach Anspruch 4, wobei es sich bei dem Fixiermittel um einen Zapfen, eine Schraube oder einen Bolzen handelt.

6. Lenksäulenverkleidungs-Baugruppe (10) nach Anspruch 3, wobei das mindestens eine erste Befestigungsmittel über einen Schnappfixiermechanismus mit Aufnahmeteil und Steckteil mit dem zweiten Befestigungsmittel in Eingriff tritt.

7. Lenksäulenverkleidungs-Baugruppe (10) nach einem der vorangehenden Ansprüche, wobei die Formteile ein Material umfassen, bei dem es sich um ein Kunststoffmaterial, ein Harz oder ein Polymer handelt.

8. Lenksäulenverkleidungs-Baugruppe (10) nach Anspruch 7, wobei das Material des Weiteren faserverstärkt ist.

9. Lenksäulenverkleidungs-Baugruppe (10) nach einem der vorangehenden Ansprüche, umfassend eine oder mehrere, im oberen und im unteren Verkleidungsglied (20, 30) befindliche Öffnungen (40, 41).

10. Lenksäulenverkleidungs-Baugruppe (10) nach einem der vorangehenden Ansprüche, umfassend eine oder mehrere, durch die Umfangsränder des oberen und des unteren Verkleidungsglieds definierte Öffnungen (40, 41).

11. Fahrzeug, umfassend eine Lenksäulenverkleidungs-Baugruppe (10) nach einem der Ansprüche 1 bis 10.

## Revendications

1. Ensemble de carénage de colonne de direction (10) destiné à être utilisé dans un véhicule comprenant:
un élément de carénage supérieur (30) et un élément de carénage inférieur (20) qui coopèrent pour enfermer une colonne de direction (11), les éléments de carénage supérieur et inférieur (20, 30) étant des pièces moulées ;
l'élément de carénage supérieur (30) ayant un bord intégralement moulé (31) qui s'étend autour de la périphérie de l'élément de carénage supérieur (30) ;
l'élément de carénage inférieur (20) définissant une surface intérieure, et ayant une protubérance intégralement moulée qui s'étend vers le haut depuis la surface intérieure et qui définit une seconde mâchoire (27) adaptée pour agripper la colonne de direction (11) ; et **caractérisé en ce que**
une bride (36) s'étend vers le bas depuis le bord (31) de l'élément de carénage supérieur (30) afin de définir une première mâchoire (37) adaptée pour agripper la colonne de direction (11) en coopération avec la seconde mâchoire (27) ; et
des moyens d'assujettissement (24, 34) sont fournis pour assujettir l'élément de carénage supérieur (30) à l'élément de carénage inférieur (20) de telle sorte que les mâchoires (27, 37) soient réunies autour de la colonne de direction (11) afin de supporter l'ensemble de carénage (10) sur la colonne de direction (11).

2. Ensemble de carénage de colonne de direction (10) selon la revendication 1, dans lequel les première et seconde mâchoires (27, 37) sont profilées de façon à fournir une zone accrue de contact de surface avec la colonne de direction (11).

3. Ensemble de carénage de colonne de direction (10) selon l'une quelconque des revendications précédentes, dans lequel les moyens d'assujettissement (24, 34) comprennent au moins une première protubérance de fixation qui s'étend vers le bas depuis une première surface intérieure de l'élément de carénage supérieur (30), et au moins une seconde protubérance d'assujettissement qui s'étend vers le haut depuis la surface intérieure de l'élément de carénage inférieur (20), de telle sorte que les pointes des protubérances d'assujettissement respectives se contactent l'une l'autre.

4. Ensemble de carénage de colonne de direction (10) selon la revendication 3, dans lequel l'au moins un premier moyen d'assujettissement et l'au moins un second moyen d'assujettissement définissent chacun une gorge adaptée pour recevoir un moyen de fixation.

5. Ensemble de carénage de colonne de direction (10) selon la revendication 4, dans lequel le moyen de fixation est sélectionné parmi une goupille ; une vis ; et un boulon.

6. Ensemble de carénage de colonne de direction (10) selon la revendication 3, dans lequel l'au moins un premier moyen d'assujettissement engrène le second moyen d'assujettissement par l'intermédiaire d'un mécanisme de fixation à encliquetage mâle-femelle.

7. Ensemble de carénage de colonne de direction (10) selon l'une quelconque des revendications précédentes, dans lequel les pièces moulées comprennent un matériau sélectionné parmi un matériau plastique ; une résine ; un polymère.

8. Ensemble de carénage de colonne de direction (10) selon la revendication 7, dans lequel le matériau est en outre renforcé de fibres.

9. Ensemble de carénage de colonne de direction (10) selon l'une quelconque des revendications précédentes, comprenant une ou plusieurs ouvertures (40, 41) situées dans les éléments de carénage supérieur et inférieur (20, 30).

10. Ensemble de carénage de colonne de direction (10) selon l'une quelconque des revendications précédentes, comprenant une ou plusieurs ouvertures (40, 41) définies par les bords périphériques des éléments de carénage supérieur et inférieur.

11. Véhicule comprenant un ensemble de carénage de colonne de direction (10) tel que décrit dans l'une quelconque des revendications 1 à 10.
